# EUROPEAN PATENT APPLICATION

(11) **EP 4 810 334 A1**
(43) Date of publication of application: **23.09.2026**
(21) Application number: 26166425.4
(22) Date of filing: 20.03.2026
(51) Int. Cl.: B60T 13/66, B60T 17/22

(54) **A SYSTEM AND METHOD FOR A VEHICLE BRAKE CONTROLLER**

(30) Priority: 20.03.2025 IN 202531025603
(71) Applicant: Transportation IP Holdings, LLC, Norwalk, CT 06851 (US)
(72) Inventor: SELVAN, K. Kalaimohana, Hosur (IN); SORNAMANI, Krishnakumar, Hosur (IN)
(74) Representative: K&L Gates LLP

(57) **Abstract**

A method and system for a brake controller configured to initiate a first emergency brake mode based on a manual input and a second emergency brake mode based on an automatic input. The brake controller comprises a plurality of electro-pneumatic brake valves coupled to pneumatic brake valves. The brake controller may be communicably coupled to a control circuit and/or an external brake system that communicate brake signals to control the plurality of electro-pneumatic brake valves and initiate the first and second emergency brake modes.

## Description

### TECHNICAL FIELD

The subject matter described herein relates to an electro-pneumatic brake controller for initiating and controlling emergency braking applications in a vehicle brake system.

### BRIEF DESCRIPTION

In one aspect, the present disclosure provides a brake controller comprising: a control circuit; a first electronic valve configured to be coupled to a first set of conduits; and a second electronic valve configured to be coupled to a second set of conduits; wherein the control circuit is configured to operate the first electronic valve and the second electronic valve in a plurality of modes, wherein the plurality of modes comprise: a default mode wherein the first electronic valve is in an energized state and the second electronic valve is in a de-energized state; a first emergency brake mode associated with a manual brake input, wherein the first electronic valve and the second electronic valve are in the de-energized state; and a second emergency brake mode associated with an automated brake input, wherein the first electronic valve and the second electronic valve are in the energized state.

In another aspect, the present disclosure provides a brake system comprising: a control circuit; a brake cylinder coupled to a brake device for wheels of a vehicle system; and an brake controller in communication with the control circuit and coupled to the brake cylinder through a brake pipe pneumatic system, wherein the brake controller comprises a first electronic valve and a second electronic valve, configured to operate in a plurality of modes responsive to control signals received from the control circuit, and wherein the plurality of modes comprise: a default mode wherein the first electronic valve is in an energized state and the second electronic valve is in a de-energized state, for not engaging a brake mechanism; a first emergency brake mode wherein the first electronic valve and the second electronic valve are in the de-energized state, for emergency braking responsive to a manual brake input; and a second emergency brake mode wherein the first electronic valve and the second electronic valve are in the energized state, for emergency braking responsive to an automated brake input.

In yet another aspect, the present disclosure provides a method for applying an emergency brake in a brake system, the method comprising: entering a default mode wherein a first electronic valve is in an energized state and a second electronic valve is in a de-energized state, and wherein a bush valve maintains a seal between a first chamber and an exhaust port; transitioning from the default mode to one of a plurality of emergency brake modes, wherein a first emergency brake mode of the plurality of emergency brake modes transitions the first electronic valve to the de-energized state and the second electronic valve remains in the de-energized state, and a second emergency brake mode of the plurality of emergency brake modes transitions the second electronic valve to the energized state and the first electronic valve remains in the energized state; venting a first BP pressure in the first chamber to the atmosphere through the exhaust port, wherein the first BP pressure in the first chamber overcomes a sealing force by the bush valve in the plurality of emergency brake modes, and wherein a brake port results in a loss of BP pressure based on the venting of the first BP pressure in the first chamber to the atmosphere; and applying, by a brake cylinder, a brake device based on the loss of the BP pressure at the brake port.

### BRIEF DESCRIPTION OF THE DRAWINGS

The subject matter may be understood from reading the following description of nonlimiting embodiments, with reference to the attached drawings, wherein below:
Fig. 1 shows a brake system for a vehicle system including an electro-pneumatic brake controller, according to at least one aspect of the present disclosure.
Fig. 2 shows a block diagram of an electro-pneumatic brake controller including a control circuit electrically coupled to a first valve, a second valve, a fifth valve, a sixth valve, and a pressure sensor transducer through a first wiring harness, and the external connector through a second wiring harness, according to at least one aspect of the present disclosure.
Fig. 3 shows the electro-pneumatic brake controller further including a filter, a choke, a spring, a dead engine cock, and a plurality of conduit passages, according to at least one aspect of the present disclosure.
Fig. 4 shows an electro-pneumatic brake controller operating in a first emergency brake mode, according to at least one aspect of the present disclosure.
Fig. 5 shows an electro-pneumatic brake controller operating in a second emergency brake mode, according to at least one aspect of the present disclosure.
Fig. 6 is a logic flow diagram for operating an electro-pneumatic brake controller, according to at least one aspect of the present disclosure.

### DETAILED DESCRIPTION

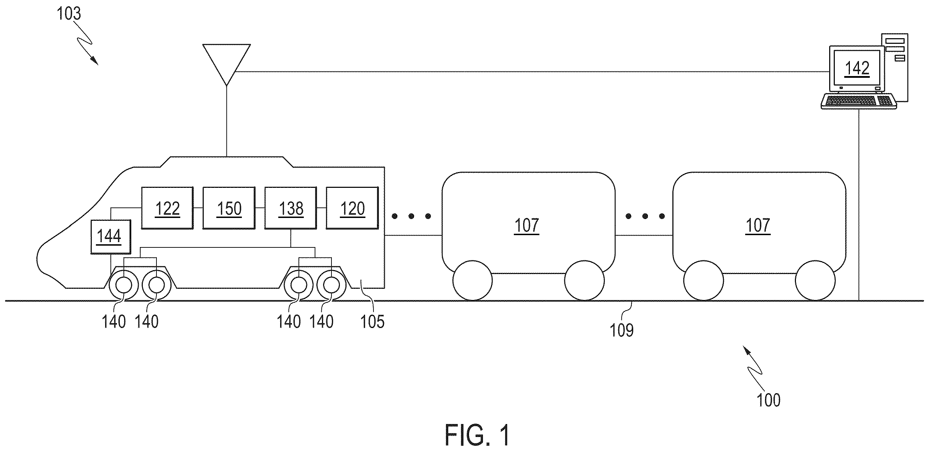

Fig. 1 shows a brake system 100 for a vehicle system 103 including an electro-pneumatic brake controller 150, according to at least one aspect of the present disclosure. The vehicle system 103 includes at least one propulsion-generating vehicle 105 (e.g., locomotive, lead vehicle) such as a vehicle including a traction motor or engine to propel the vehicle system, and at least one non-propulsion generating vehicles 107 (e.g., railcar, tailer, remote vehicle). The electro-pneumatic brake controller 150 is communicably coupled to a control circuit 120 and an external system 142 (e.g., positive train control system, emergency braking system) directly or indirectly through the control circuit 120. The control circuit 120 may receive brake signals locally from within the cabin of the propulsion vehicle 105 or brake signals (e.g., emergency brake signals) externally from the external system 142. The external system 142 may communicate the brake signals to the electro-pneumatic brake controller 150 through various communication mediums including a wireless transmission that may be received directly, or indirectly by passing through the control circuit 120. In another example, the external system 142 (e.g., emergency braking system, positive train control system) may communicate a brake signal through a voltage signal conveyed through a conductive medium like a rail in a railroad system. The vehicle system 103 may include a track communication sensor 144 that detects the presence of communication signals through the wheel of a vehicle 103, 107. The track communication sensor 144 may receive a control signal has been communicated through the rail 109 and conveys the control signal to the control circuit or directly to the electro-pneumatic brake controller 150 through an external connector 122.

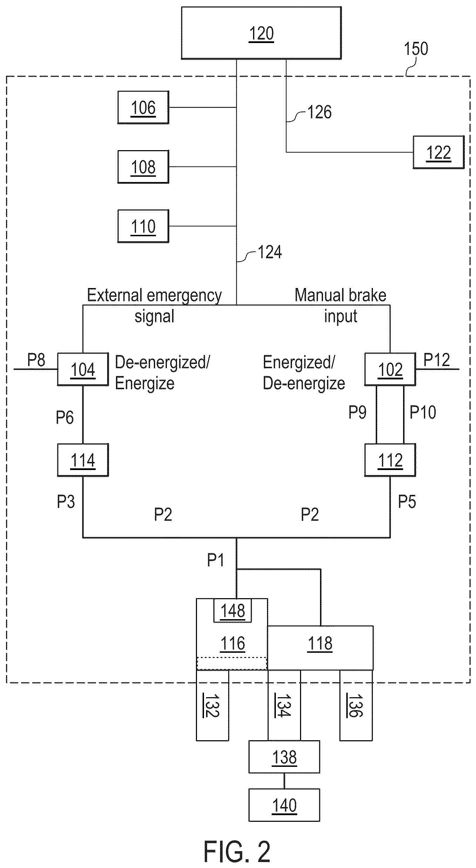

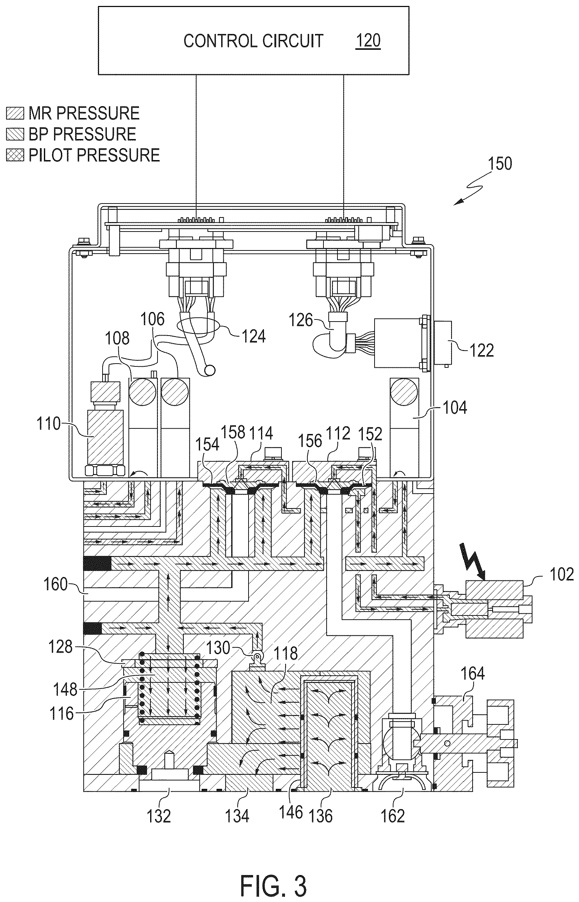

Once the brake signals are received by the electro-pneumatic brake controller 150, the brake signals may be communicated or conveyed through a plurality of conduits or pipe passageways (see conduits P1-P13 in FIG. 3) and electro-pneumatic valves (see FIG. 2), to the brake relay valve 138. The brake relay valve 138 is coupled to the brake port 134 and a brake mechanism 140 (e.g., disk brakes, brake shoes) and may be configured to apply or release the brakes for a vehicle or vehicle system.

Fig. 2 shows a block diagram of an electro-pneumatic brake controller 150 including a control circuit 120 electrically coupled to a first valve 102 (e.g., electro-pneumatic valve, magnetic valve), a second valve 104 (e.g., electro-pneumatic valve, magnetic valve), a fifth valve 106 (MV7), a sixth valve 108 (MV8), and a pressure sensor transducer 110 through a first wiring harness 124, and the external connector 122 through a second wiring harness 126, according to at least one aspect of the present disclosure. The control circuit 120 receives system commands (e.g., manual brake commands, automatic emergency brake commands) from the external connector 122 through a second wiring harness 126. In one example, the first wiring harness 124 may be associated with a first emergency brake mode (e.g., low active brake mode) and a second emergency brake mode (e.g., high active brake mode), while the second wiring harness 126 may be associated with vehicle system or brake system logic-based automated emergency brake commands. The control circuit 120 may send feedback commands to an external system 142 through the external connector 122 via the second wiring harness 126.

The electro-pneumatic brake controller 150 further includes a third valve 112 (e.g., pneumatic valve), a fourth valve 114 (e.g., pneumatic valve), a bush valve 116, a first chamber 148, and a second chamber 118. The first valve 102 is coupled to a third valve 112 through conduit P9 (e.g., pipe passage or conduit) and conduit P10. The first valve 102 may be configured in an energized state by default (e.g., first mode, normal mode of operation). The first valve 102 is configured to receive a command signal from the control circuit 120 to transition to a de-energized state (e.g., second mode, emergency brake mode) based on a manual brake input. The manual brake input may be a hard-wired emergency command provided directly from the locomotive 105. The second valve 104 is coupled to a fourth valve 114 through a third conduit P6. The second valve 104 may be configured in a de-energized state by default (e.g., first mode, normal mode of operation). The second valve 104 may be configured to receive a command signal from the control circuit 120 to transition to an energized state (e.g., second mode, emergency brake mode) based on an emergency signal from the external system 142. The third valve 112 may be coupled to conduit P3, and the fourth valve 114 may be coupled to conduit P5. The conduit P3 and conduit P5 merge at conduit P2, which directs the brake pipe (BP) pressure into a first chamber 148 of the bush valve 116 through an eighth conduit P1. A second chamber 118 is coupled to a first exhaust port 132, a brake port 134, and a supply port 136. The bush valve 116 is adjacent to the second chamber 118 and seals the first exhaust port 132 when the bush valve is in a closed position. The first exhaust port 132 may be configured to vent the second chamber 118 to the atmosphere, when the bush valve 116 is in an opened position. When the bush valve 116 is in the closed position, the first exhaust port 132 is sealed and the BP pressure of the second chamber 118 remains in a pressurized state.

Fig. 3 shows the electro-pneumatic brake controller 150 further including a filter 146, a choke 130, a spring 128, a dead engine cock 164, and a plurality of conduit passages (P1-P13), according to at least one aspect of the present disclosure. The brake controller 150 receives BP pressure from the supply port 136 and pressurizes the second chamber 118. The BP pressure passes through the choke 130 that restricts the amount of BP pressure that can pass from the second chamber 118 to conduit P1. The BP pressure from conduit P1 pressurizes the first chamber 148 and the BP pressure combines with the force of the spring 128 to keep the bush 116 in a closed position. When the bush 116 is in a closed position, the first exhaust port 132 is sealed. The BP pressure from the supply port 136 maintains BP pressure in the brake port 134 and prevents the brakes from being applied. The dead engine cock 164 is shown in an opened position allowing the BP pressure to be vented to the atmosphere though the second exhaust port 162.

In one example, when the brake system 100 is in a normal mode of operation, the brakes are not applied and the first valve 102 is energized and the second valve 104 is de-energized. The first valve 102 is coupled to the third valve 112 through conduit P9 and the second conduit P10. The first valve 102 may be energized in a first state that allows the third chamber 156 of the third valve 112 to fill with BP pressure, provided from conduit P5 and the conduit P6. Once the fourth chamber 158 of the fourth valve 114 pressurizes, the BP pressure in the fourth chamber 158 equalizes with conduit P9. When the pressure is in equilibrium, the first diaphragm 152 remains closed and prevents the third valve 112 from venting the BP pressure to the atmosphere, through conduit P11 to the second exhaust port 162 (e.g., exhaust port). Similarly, the second valve 104 is coupled to the fourth valve 114 through conduit P5 and conduit P6. The second valve 104 may be de-energized in a first state that allows the fourth chamber 158 of the fourth valve 114 to fill with BP pressure, provided from conduit P5 and conduit P6. Once the fourth chamber 158 of the fourth valve 114 pressurizes, the BP pressure in the fourth chamber 158 equalizes with conduit P3. When the pressure is in equilibrium, the second diaphragm remains closed and prevents the fourth valve 114 from venting the BP pressure to the atmosphere, through conduit P7 to the first exhaust port Port3.

In another example, to initiate an emergency brake mode, the plurality of valves may be configured to vent the BP pressure to the atmosphere through a third exhaust port 160 or a second exhaust port 162. When the BP pressure is vented to the atmosphere, there is a cascading BP pressure loss throughout the plurality of conduits and ultimately results in a decrease in the brake pipe pressure in the brake port 134. The brake port 134 is couple to brake relay valve 138, and when there the BP pressure in the brake port 134 drops, the brake relay valve 138 applies the vehicle brakes through the brake mechanism 140.

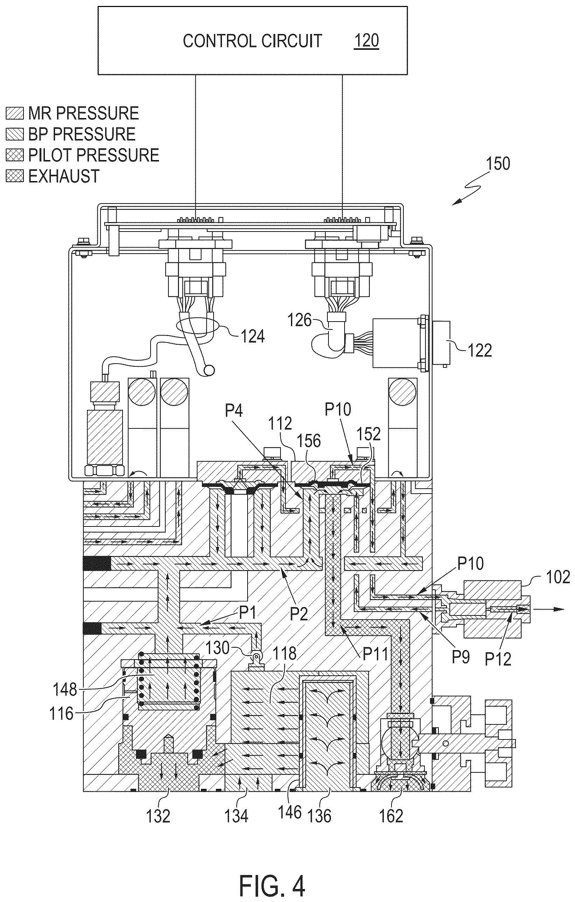

Fig. 4 shows an electro-pneumatic brake controller 150 operating in a first emergency brake mode (e.g., low active vigilance emergency brake mode), according to at least one aspect of the present disclosure. The first valve 102 is coupled to a first set of conduits (P9, P10, P12) and receives a command signal from the locomotive 105, via the external connector 122, and causes the first valve 102 to de-energize. In response to de-energizing, the first valve 102 vents the BP pressure from conduits P9 and P10 to the atmosphere through conduit P12 in the first valve 102. The first valve 102 is coupled to the third valve 112 through conduit P9 and conduit P10. The third valve 112 may also be coupled to four conduits including P4, P11, P9, and P10. Once the first valve 102 vents the BP pressure from conduits P9 and P10, the third chamber 156 of the third valve 112 is no longer in equilibrium with conduit P9. The first diaphragm 152 moves to an open position that allows BP pressure in conduit P4 to route through conduit P11 and vent to the atmosphere through second exhaust port 162. The loss of BP pressure at conduit P4 may create a cascading effect through the plurality of conduits and result in a decreased BP pressure at the first chamber 148. The combined force of the BP pressure in the first chamber 148 and the force of the spring 128 may be insufficient to overcome the BP pressure in the second chamber 118. The force from the second chamber 118 compresses the spring 128 and pushes the bush 116 into an open position that allows the BP pressure from the second chamber 118 to be vented to the atmosphere through the first exhaust port 132 (e.g., exhaust port). The BP pressure in the second chamber 118 decreases from the BP pressure from being vented through the first exhaust port 132, resulting in a decrease in BP pressure of the brake port 134. The brake relay valve may determine that the BP pressure in the brake port 134 has decreased and applies the brake mechanism 140.

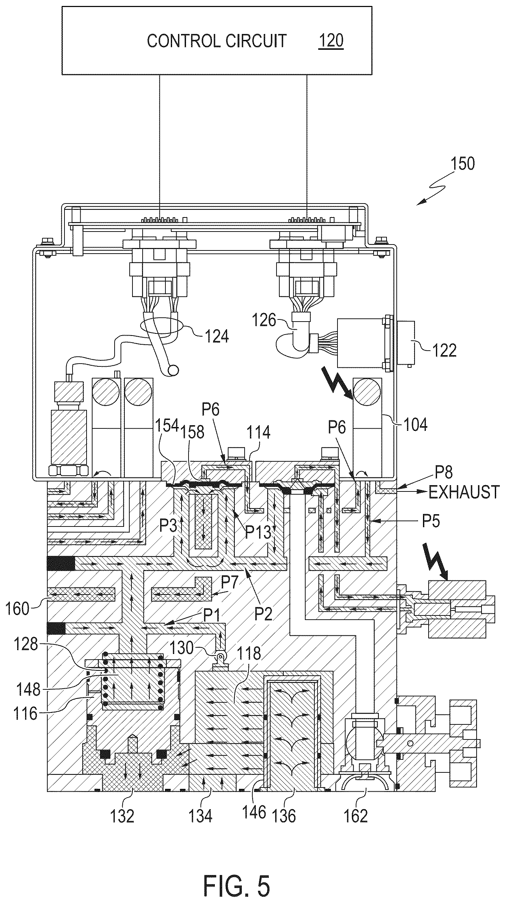

Fig. 5 shows an electro-pneumatic brake controller 150 operating in a second emergency brake mode (e.g., high active emergency brake mode), according to at least one aspect of the present disclosure. The second valve 104 is coupled to a second set of conduits (P6, P5, P8) and receives a command signal and is energized in response to the command signal from the external system 142 or the control circuit 120. In response to energizing, the second valve 104 vents the BP pressure from conduit P6 to the atmosphere through conduit P8 coupled to the second valve 104. The second valve 104 is coupled to the fourth valve 114 through the conduit P6 and conduit P5. The fourth valve 114 may also be coupled to four conduits including P3, P6, P7, and P13. Once the second valve 104 vents the BP pressure from conduit P6, the fourth chamber 158 of the fourth valve 114 is no longer in equilibrium with the conduit P6. The second diaphragm 154 moves to an open position that allows BP pressure in conduit P3 to route through conduit P7 and vent to the atmosphere through third exhaust port 160. The loss of BP pressure at conduit P3 may create a cascading effect through the plurality of conduits that results in a decreased BP pressure at the first chamber 148. As similarly shown in FIG. 4, the combined force of the BP pressure in the first chamber 148 and the force of the spring 128 may be insufficient to overcome the BP pressure in the second chamber 118. The force from the second chamber 118 compresses the spring 128 and pushes the bush 116 into an open position that allows the BP pressure from the second chamber 118 to be vented to the atmosphere through the first exhaust port 132 (e.g., exhaust port). The BP pressure in the second chamber 118 decreases from the BP pressure from being vented through the first exhaust port 132, resulting in a decrease in BP pressure of the brake port 134. The brake relay valve may determine that the BP pressure in the brake port 134 has decreased and applies the brake mechanism 140.

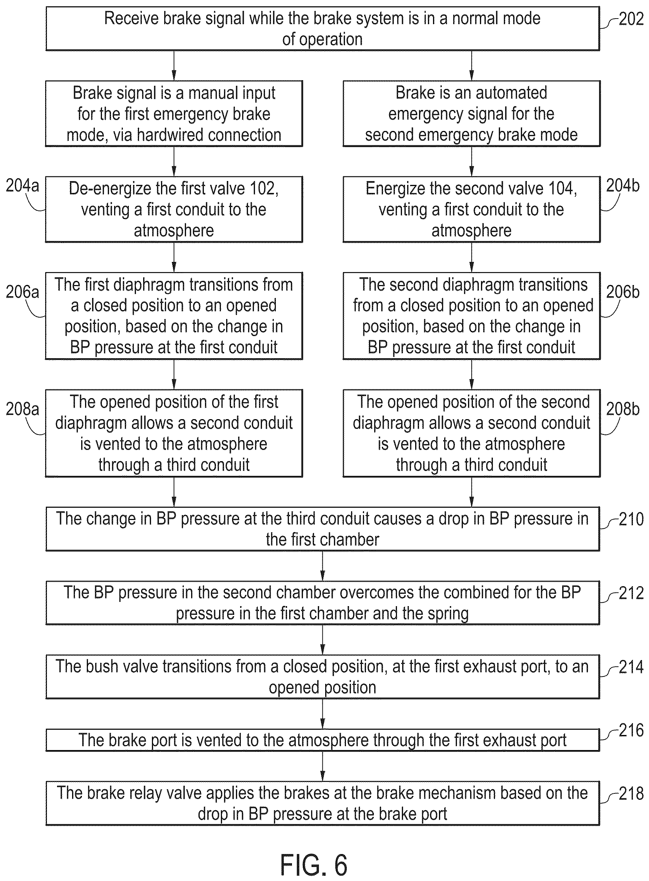

Fig. 6 is a logic flow diagram for operating an electro-pneumatic brake controller, according to at least one aspect of the present disclosure. The electro-pneumatic brake controller 150 may receive 202 a plurality of brake signals to initiate the first emergency brake mode or the second emergency brake mode. The brake signal may cause the brake controller 150 to transition from a normal mode of operation to the first or second emergency brake mode.

In one example, the first emergency brake mode is initiated based on a brake signal indicative of a manual input from the locomotive 105. The first valve 102 receives a brake signal from the locomotive 104 which causes the first valve 102 to de-energize 204a and vent the BP pressure from a first conduit (P9) and second conduit (P10) through a third exhaust conduit (P12), coupled to first valve 102, and to the atmosphere. The first diaphragm of the third valve 112 transitions 206a to an open position based on a change in BP pressure from the first conduit (P9) and second conduit (P10) coupled to the third valve 112. In the open position, the first diaphragm no longer seals a fourth conduit (P4) and fifth (P11) conduit coupled to the third valve 112. The third valve 112 vents 208a the BP pressure in the fourth (P4) conduit to the atmosphere through the fifth conduit (P11) conduit.

In another example, the second emergency brake mode is initiated based on a brake signal is indicative of an automated emergency brake signal (e.g., from the control circuit, transducer, or external system). The second valve 104 receives a brake signal which causes the second valve 104 to energize and vent the BP pressure from a first conduit (P6) through a second exhaust conduit (P8) coupled to the second valve 104, to the atmosphere. The second diaphragm of the fourth valve 114 transitions 206b to an open position based on a change in BP pressure from the first conduit (P6) coupled to the fourth valve 114. In the open position, the second diaphragm no longer seals a third conduit (P3) and a fourth conduit (P7) coupled to the fourth valve 114. The fourth valve 114 vents 208b the third conduit (P3) to the atmosphere through the fourth conduit (P7).

The third valve 112 and the fourth valve 114 cause a change in BP pressure at sixth conduit (P2) which cascades throughout the brake controller 150 and causes 210 a drop in BP pressure in the first chamber 148. The BP pressure in the second chamber 118 overcomes 212 (greater than) the combined for of the spring 128 and the BP pressure in the first chamber 148. The bush valve 116 transitions 214 from the closed position that seals the first exhaust port 132 to the opened position. The opened position allows the brake port 134 to vent 216 through the first exhaust port to the atmosphere. The brake relay valve 138 detects the loss of BP pressure in the brake port 134 and applies 218 the brake mechanism 140 of the vehicle system 103.

Examples of the method disclosed herein, according to various aspects of the present disclosure, are provided below in the following embodiments. An aspect of the method may include any one or more than one of, and any combination of, the embodiments described below.

In a first embodiment a brake controller includes a control circuit, a first electronic valve configured to be coupled to a first set of conduits, and a second electronic valve configured to be coupled to a second set of conduits. The control circuit is configured to operate the first electronic valve and the second electronic valve in a plurality of modes, where the plurality of modes includes a default mode, a first emergency brake mode, and a second emergency brake mode. The brake controller is configured for the default mode, where the first electronic valve is in an energized state and the second electronic valve is in a de-energized state. The brake controller is configured for the first emergency brake mode associated with a manual brake input, where the first electronic valve and the second electronic valve are in the de-energized state. Finally, the brake controller is configured for the second emergency brake mode associated with an automated brake input, wherein the first electronic valve and the second electronic valve are in the energized state.

In a first aspect of the first embodiment, the first electronic valve includes a first sealing component transitionable between a first open position and a first closed position, and the second electronic valve comprises a second sealing component transitionable between a second open position and a second closed position. Additionally, the brake controller includes a third valve coupled to a third set of conduits, wherein the first electronic valve is coupled to the third valve through one or more conduits in both the first set of conduits and the third set of conduits, and a fourth valve coupled to a fourth set of conduits, wherein the second electronic valve is coupled to the fourth valve through one or more conduits in both the second set of conduits and the fourth set of conduits. Additionally, or alternatively, the third valve includes a first diaphragm transitionable between a third open position and a third closed position, where the fourth valve includes a second diaphragm transitionable between a fourth open position and a fourth closed position, and/or the first electronic valve is coupled to the third valve through a first conduit and a second conduit, and wherein the second electronic valve is coupled to the fourth valve through a third conduit.

In a second aspect of the first embodiment, the control circuit is configured to update the first electronic valve from the energized state in the default mode to the de-energized state in the first emergency brake mode, and update the second electronic valve from the de-energized state in the default mode to the energized state in the second emergency brake mode. The first emergency brake mode and the second emergency brake mode are configured to cause an emergency braking of a vehicle system in a vehicle system. The control circuit is configured to control the first electronic valve to the de-energized state based on a brake signal received by the manual brake input from a vehicle in the vehicle system, or control the second electronic valve to the energized state based on a brake signal received by the automated brake input. The automated brake input is generated based on a first brake pipe (BP) pressure monitored at a determined brake pipe conduit, wherein the first brake pipe pressure is monitored by a pressure transducer and communicated to the control circuit. Additionally or alternatively, the automated brake input is generated based on a monitored condition of the vehicle system by an external system.

In a third aspect of the first embodiment, the brake controller further includes a plurality of ports, wherein the plurality of ports comprises: a supply port, a brake port, and a first exhaust port, and a bush valve. The brake port is configured to vent a second BP pressure through the first exhaust port to the atmosphere in the first emergency brake mode and the second emergency brake mode, and causes a brake relay valve to apply a brake device. Additionally, the bush valve is transitionable between a fifth open position and a fifth closed position, wherein the bush valve seals the first exhaust port in the fifth closed position, and wherein the bush valve vents the brake port through the first exhaust port in the fifth open position.

In a second embodiment a brake system includes a control circuit, brake cylinder, brake device, and brake controller. The brake controller is in communication with the control circuit and coupled to the brake cylinder through a brake pipe pneumatic system. The brake controller includes a first electronic valve and a second electronic valve, configured to operate in a plurality of modes responsive to control signals received from the control circuit, and wherein the plurality of modes includes a default mode, a first emergency brake mode, and a second emergency brake mode. The brake controller is configured in the default mode where the first electronic valve is in an energized state and the second electronic valve is in a de-energized state, for not engaging a brake mechanism. The brake controller is configured in the first emergency brake mode wherein the first electronic valve and the second electronic valve are in the de-energized state, for emergency braking responsive to a manual brake input. The brake controller is configured in the second emergency brake mode wherein the first electronic valve and the second electronic valve are in the energized state, for emergency braking responsive to an automated brake input.

In a first aspect of the second embodiment, the brake controller includes a third valve coupled to a first set of conduits, wherein the first electronic valve is coupled to the third valve through one or more conduits in the first set of conduits, and a fourth valve coupled to a second set of conduits, wherein the second electronic valve is coupled to the fourth valve through one or more conduits in the second set of conduits. The third valve includes a first diaphragm transitionable between a first open position and a first closed position, and wherein the fourth valve comprises a second diaphragm transitionable between a second open position and a second closed position. Additionally, the brake controller includes a transducer configured to monitor a first brake pipe (BP) pressure at a brake pipe conduit and transmit the first BP pressure at the brake pipe conduit to the control circuit.

The control circuit communicates a brake signal to the second electronic valve, wherein the brake signal is configured to transition the second electronic valve from the de-energized state in the default mode to the energized state in the second emergency brake mode, based on the first BP pressure at the brake pipe conduit. Alternatively, the first and second electronic valves in the first emergency brake mode and the second emergency brake mode is configured to cause a loss of BP pressure in a brake port based on a second BP pressure vented through a first exhaust port to the atmosphere, and wherein a brake relay valve is configured to apply the brake device responsive to the loss of the BP pressure in the brake port.

In a third embodiment, an emergency brake in a brake system is configured for entering a default mode wherein a first electronic valve is in an energized state and a second electronic valve is in a de-energized state, and wherein a bush valve maintains a seal between a first chamber and an exhaust port. The brake system is configured for transitioning from the default mode to one of a plurality of emergency brake modes, wherein a first emergency brake mode of the plurality of emergency brake modes transitions the first electronic valve to the de-energized state and the second electronic valve remains in the de-energized state, and a second emergency brake mode of the plurality of emergency brake modes transitions the second electronic valve to the energized state and the first electronic valve remains in the energized state. Next, the brake system is configured for venting a first BP pressure in the first chamber to the atmosphere through the exhaust port, wherein the first BP pressure in the first chamber overcomes a sealing force by the bush valve in the plurality of emergency brake modes, and wherein a brake port results in a loss of BP pressure based on the venting of the first BP pressure in the first chamber to the atmosphere. Finally, the brake system is configured for applying, by a brake cylinder, a brake device based on the loss of the BP pressure at the brake port.

In a first aspect of the third embodiment, the sealing force by the bush valve comprises a spring force and a second BP pressure in a second chamber. Additionally, the first electronic valve causes a third BP pressure to vent to the atmosphere through a second exhaust port in the first emergency brake mode, and the second electronic valve causes a fourth BP pressure to vent to the atmosphere through a third exhaust port in the second emergency brake mode. The brake system is further configured for venting the third BP pressure to the atmosphere through the second exhaust port, decreasing the second BP pressure in the second chamber based on the venting of the third BP pressure to the atmosphere through the second exhaust port, venting the fourth BP pressure to the atmosphere through the third exhaust port; and decreasing the second BP pressure in the second chamber based on the venting of the fourth BP pressure to the atmosphere through the third exhaust port.

Embodiments may be described in connection with a rail vehicle system, such as a locomotive or switcher, or other types of vehicle systems, such as automobiles, trucks (with or without trailers), buses, marine vessels, aircraft, unmanned aircraft (e.g., drones), mining vehicles, agricultural vehicles, or other off-highway vehicles. Vehicle systems described herein (rail vehicle systems or other vehicle systems that do not travel on rails or tracks) may be formed from a single vehicle or multiple vehicles. With respect to multi-vehicle systems, the vehicles may be mechanically coupled with each other (e.g., by couplers), or virtually or logically coupled but not mechanically coupled. For example, vehicles may be logically but not mechanically coupled when the separate vehicles communicate with each other to coordinate movements of the vehicles with each other so that the vehicles travel together (e.g., as a convoy, swarm, consist, platoon). Calculations and computations, such as navigation processes, may be performed on-board the vehicle systems or off-board the vehicle systems and then communicated to the vehicle systems. Whether on-board or off-board, a vehicle control system may operate a vehicle system and receive and process sensor inputs, operator inputs, operational parameters, vehicle parameters, and route parameters, etc.

The terms "control circuit" and "controller" are substitutable with each other and encompasses hardwired circuitry, programmable logic (such as microprocessors, microcontrollers, digital signal processors (DSPs), programmable logic devices (PLDs), programmable gate arrays (PGAs), or field-programmable gate arrays (FPGAs)), state machines, or firmware that executes stored instructions. Control circuits may form part of larger systems, such as integrated circuits (ICs), application-specific integrated circuits (ASICs), or systems-on-chips (SoCs), and may be found in devices such as computers, smartphones, wearable devices, and servers. These circuits may perform tasks involving data processing, communication, or data storage. Depicted components, functions, or operations may be implemented using hardware, software, firmware, or combinations of two or more thereof.

Instructions for implementing system features may be stored in various types of memory. Suitable memory may include dynamic random-access memory (DRAM), flash memory, and/or cache. These instructions may be distributed over a network or via other computer-readable media. The term "non-transitory computer-readable medium" refers to any physical medium capable of storing or transmitting instructions or information that may be read by a machine. Examples of suitable media include RAM, ROM, EPROM, EEPROM, magnetic or optical media, flash memory, or even propagated signals such as carrier waves or infrared signals.

In some embodiments, the control circuit may utilize machine learning (ML) techniques to make decisions based on sensor inputs or other data. Suitable ML methods may include supervised learning (with labeled inputs and outputs), unsupervised learning (for identifying patterns), or reinforcement learning (where the system adapts based on feedback). Suitable tasks for ML systems may involve classification, regression, clustering, anomaly detection, or optimization. ML may employ algorithms, such as decision trees, deep learning, support vector machines (SVMs), or neural networks, depending on the application. A suitable control circuit may incorporate a policy engine that applies specific rules based on equipment characteristics or environmental conditions. For instance, a neural network could process sensor data or operational inputs to determine appropriate actions. Techniques such as backpropagation or evolutionary strategies may be used to refine neural network parameters and optimize model selection for the given task.

In one embodiment, the control circuit (or controller) and system described herein may use machine learning to make determinations and to enable derivation-based learning outcomes. The system may communicate with a data collection system. The control circuit may learn from, model and make decisions/determinations on a set of data (including data provided by various sensors and data collection systems) by making data-driven predictions and adapting according to available data and modeling. Machine learning may involve performing tasks using supervised learning, unsupervised learning, and reinforcement learning systems. Supervised learning may use a set of example inputs and desired outputs to the machine learning systems, where unsupervised learning may use a learning algorithm that is structuring its input with, e.g., pattern detection and/or feature learning. Reinforcement learning may perform in a dynamic environment and then provide feedback about correct and incorrect decisions. Machine learning may include tasks based on certain outputs. These tasks may be machine learning problems such as classification, regression, clustering, density estimation, dimensionality reduction, anomaly detection, and the like to include other mathematical and statistical techniques. Suitable machine learning algorithmic types may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In embodiments, certain machine learning algorithms may be used (e.g., for solving both constrained and unconstrained optimization problems that may be based on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used for making determinations, calculations, comparisons and behavior analytics, and the like.

As mentioned above, the control circuit may include a policy engine. The policies the engine may apply may be based at least in part on characteristics of a given item of equipment or environment. For example, an artificial intelligence system, such as a neural network, may receive input of a number of environmental and task-related parameters. These parameters may include, for example, operational input of the given equipment, data from various sensors, environmental information, location and/or position data, and the like. The neural network may be trained and may generate an output based on these inputs, with the output representing an action or sequence of actions that the equipment or system should take to accomplish the goal of the operation. The control circuit may process the inputs through the parameters of the neural network to generate a value (i.e., make a determination) at the output node designating that action as the desired action, activity, or operating state. An action may translate into a signal that causes the vehicle to operate in a particular manner. The control circuit may accomplish this via back-propagation, feed forward processes, closed loop feedback, or open loop feedback, for example. Alternatively, rather than using backpropagation, the control circuit may use evolution strategies techniques to tune various parameters of the neural network. The control circuit may use neural network architectures that have a set of parameters representing weights of its node connections. A number of copies of this network may be generated and adjustments to the parameters may be made with subsequent simulations. Once the outputs from the various models have been obtained, they may be evaluated on their performance using a determined success metric. The best model or a good-enough model may be selected, and the control circuit may execute that plan to achieve the desired input data to mirror the predicted 'best outcome' scenario. Additionally, the success metric itself may be a combination of the optimized outcomes, which may be weighed relative to each other. Success metrics may be dynamically established, and the process rerun and the equipment directions further modified.

In certain embodiments, maintenance and diagnostic functions may be integrated into the control circuit, enabling the system to self-monitor for operational health. The control circuit may utilize diagnostic algorithms to assess the status of various vehicle components, such as engines, brakes, batteries, fuel cells and fuel systems, propulsion systems, and electronic systems (if present). If a component is found to be underperforming or at risk of failure, the control circuit may schedule alerts, recommend maintenance, or initiate safety protocols to avoid catastrophic failure. Self-diagnostics may use historical performance data to identify trends, facilitating proactive rather than reactive maintenance.

Terms such as "processing," "computing," "calculating," or "determining" refer to operations carried out by the control circuit, which may include computing systems or electronic devices that manipulate data represented as physical (electronic) quantities within memory or registers. One or more components may be described as "configured to," "configurable to," "operable/operative to," "adapted/adaptable to," or similar terms. Unless explicitly stated, these terms encompass components in both active and inactive states. Unless stated otherwise, terms like "including" or "having" should be interpreted as open-ended (i.e., "including but not limited to"). Numeric claim recitations generally mean "at least" the stated number, and disjunctive terms like "A or B" should be interpreted to include either or both unless explicitly specified. Operations in any claim may generally be performed in any order unless explicitly stated. The recitation "at least one of A, B, and C" should be interpreted as any combination of A, B, and C, such A alone, B alone, C alone, A and B together, A and C together, B and C together, and/or A, B, and C together. The recitation "at least one of A, B, or C" should be interpreted to include A alone, B alone, C alone, A and B together, A and C together, B and C together, and/or A, B, and C together.

This written description may disclose several embodiments of the subject matter, including the best mode, and may enable one of ordinary skill in the relevant art to practice the embodiments of subject matter, including making and using any devices or systems and performing any incorporated methods. The patentable scope of the subject matter is defined by the claims, and may include other embodiments that may occur to one of ordinary skill in the art. Such other embodiments may be intended to be within the scope of the claims if they may have structural elements that may not differ from the literal language of the claims, or if they may include equivalent structural elements with insubstantial differences from the literal languages of the claims.

## Claims

1. A brake controller comprising:
a control circuit;
a first electronic valve configured to be coupled to a first set of conduits; and
a second electronic valve configured to be coupled to a second set of conduits;
wherein the control circuit is configured to operate the first electronic valve and the second electronic valve in a plurality of modes, wherein the plurality of modes comprise:
a default mode wherein the first electronic valve is in an energized state and the second electronic valve is in a de-energized state;
a first emergency brake mode associated with a manual brake input, wherein the first electronic valve and the second electronic valve are in the de-energized state; and
a second emergency brake mode associated with an automated brake input, wherein the first electronic valve and the second electronic valve are in the energized state.

2. The brake controller of claim 1, wherein:
the first electronic valve comprises a first sealing component transitionable between a first open position and a first closed position;
the second electronic valve comprises a second sealing component transitionable between a second open position and a second closed position; and
the brake controller further comprises:
a third valve coupled to a third set of conduits, wherein the first electronic valve is coupled to the third valve through one or more conduits in both the first set of conduits and the third set of conduits; and
a fourth valve coupled to a fourth set of conduits, wherein the second electronic valve is coupled to the fourth valve through one or more conduits in both the second set of conduits and the fourth set of conduits.

3. The brake controller of claim 1, wherein the control circuit is further configured to:
update the first electronic valve from the energized state in the default mode to the de-energized state in the first emergency brake mode; and
update the second electronic valve from the de-energized state in the default mode to the energized state in the second emergency brake mode,
wherein the first emergency brake mode and the second emergency brake mode are configured to cause an emergency braking of a vehicle system in a vehicle system.

4. The brake controller of claim 3, wherein the control circuit is further configured to:
control the first electronic valve to the de-energized state based on a brake signal received by the manual brake input from a vehicle in the vehicle system.

5. The brake controller of claim 3, wherein the control circuit is further configured to:
control the second electronic valve to the energized state based on a brake signal received by the automated brake input.

6. The brake controller of claim 5, wherein the automated brake input is generated based on a first brake pipe (BP) pressure monitored at a determined brake pipe conduit, wherein the first brake pipe pressure is monitored by a pressure transducer and communicated to the control circuit.

7. The brake controller of claim 5, wherein the automated brake input is generated based on a monitored condition of the vehicle system by an external system.

8. The brake controller of claim 1, further comprises a plurality of ports, wherein the plurality of ports comprises:
a supply port;
a brake port;
a first exhaust port, wherein the brake port is configured to vent a second BP pressure through the first exhaust port to the atmosphere in the first emergency brake mode and the second emergency brake mode, and causes a brake relay valve to apply a brake device; and
a bush valve transitionable between a fifth open position and a fifth closed position, wherein the bush valve seals the first exhaust port in the fifth closed position, and wherein the bush valve vents the brake port through the first exhaust port in the fifth open position.

9. The brake controller of claim 2, wherein the third valve comprises a first diaphragm transitionable between a third open position and a third closed position, and wherein the fourth valve comprises a second diaphragm transitionable between a fourth open position and a fourth closed position.

10. The brake controller of claim 2, wherein the first electronic valve is coupled to the third valve through a first conduit and a second conduit, and wherein the second electronic valve is coupled to the fourth valve through a third conduit.

11. A brake system comprising:
a control circuit;
a brake cylinder coupled to a brake device for wheels of a vehicle system; and
a brake controller in communication with the control circuit and coupled to the brake cylinder through a brake pipe pneumatic system, wherein the brake controller comprises a first electronic valve and a second electronic valve, configured to operate in a plurality of modes responsive to control signals received from the control circuit, and wherein the plurality of modes comprise:
a default mode wherein the first electronic valve is in an energized state and the second electronic valve is in a de-energized state, for not engaging a brake mechanism;
a first emergency brake mode wherein the first electronic valve and the second electronic valve are in the de-energized state, for emergency braking responsive to a manual brake input; and
a second emergency brake mode wherein the first electronic valve and the second electronic valve are in the energized state, for emergency braking responsive to an automated brake input.

12. The brake system of claim 11, wherein the brake controller further comprises:
a third valve coupled to a first set of conduits, wherein the first electronic valve is coupled to the third valve through one or more conduits in the first set of conduits; and
a fourth valve coupled to a second set of conduits, wherein the second electronic valve is coupled to the fourth valve through one or more conduits in the second set of conduits.

13. The brake system of claim 12, wherein the third valve comprises a first diaphragm transitionable between a first open position and a first closed position, and wherein the fourth valve comprises a second diaphragm transitionable between a second open position and a second closed position.

14. The brake system of claim 13, further comprising:
a transducer configured to monitor a first brake pipe (BP) pressure at a brake pipe conduit and transmit the first BP pressure at the brake pipe conduit to the control circuit; and
the control circuit is configured to communicate a brake signal to the second electronic valve, wherein the brake signal is configured to transition the second electronic valve from the de-energized state in the default mode to the energized state in the second emergency brake mode, based on the first BP pressure at the brake pipe conduit.

15. The brake system of claim 13, wherein operation of the first and second electronic valves in the first emergency brake mode and the second emergency brake mode is configured to cause a loss of BP pressure in a brake port based on a second BP pressure vented through a first exhaust port to the atmosphere, and wherein a brake relay valve is configured to apply the brake device responsive to the loss of the BP pressure in the brake port.

16. A method for applying an emergency brake in a brake system, the method comprising:
entering a default mode wherein a first electronic valve is in an energized state and a second electronic valve is in a de-energized state, and wherein a bush valve maintains a seal between a first chamber and an exhaust port;
transitioning from the default mode to one of a plurality of emergency brake modes, wherein a first emergency brake mode of the plurality of emergency brake modes transitions the first electronic valve to the de-energized state and the second electronic valve remains in the de-energized state, and a second emergency brake mode of the plurality of emergency brake modes transitions the second electronic valve to the energized state and the first electronic valve remains in the energized state;
venting a first BP pressure in the first chamber to the atmosphere through the exhaust port, wherein the first BP pressure in the first chamber overcomes a sealing force by the bush valve in the plurality of emergency brake modes, and wherein a brake port results in a loss of BP pressure based on the venting of the first BP pressure in the first chamber to the atmosphere; and
applying, by a brake cylinder, a brake device based on the loss of the BP pressure at the brake port.

17. The method of claim 16, wherein the sealing force by the bush valve comprises a spring force and a second BP pressure in a second chamber.

18. The method of claim 17, wherein the first electronic valve causes a third BP pressure to vent to the atmosphere through a second exhaust port in the first emergency brake mode, and the second electronic valve causes a fourth BP pressure to vent to the atmosphere through a third exhaust port in the second emergency brake mode.

19. The method of claim 18, further comprising:
venting the third BP pressure to the atmosphere through the second exhaust port; and
decreasing the second BP pressure in the second chamber based on the venting of the third BP pressure to the atmosphere through the second exhaust port.

20. The method of claim 19, further comprising:
venting the fourth BP pressure to the atmosphere through the third exhaust port; and
decreasing the second BP pressure in the second chamber based on the venting of the fourth BP pressure to the atmosphere through the third exhaust port.
